# EUROPEAN PATENT SPECIFICATION

(11) **EP 0 855 292 B1**
(45) Date of publication and mention of the grant of the patent: **13.11.2002**
(21) Application number: 98101268.5
(22) Date of filing: 26.01.1998
(51) Int. Cl.: B60C 11/12, B60C 11/13

(54) **Tyre and tread band for tyres, in particular for lorries and the like**
Reifen und Laufflächenprofil für Reifen, insbesondere für LKW und dergleichen
Pneumatiques et bande de roulement pour pneu, en particulier pour camions et similaires

(30) Priority: 28.01.1997 IT MI970150
(43) Date of publication of application: 29.07.1998
(73) Proprietor: PIRELLI PNEUMATICI Società per Azioni, 20126 Milano (IT)
(72) Inventor: Carra, Alberto, 20129 Milan (IT); Campana, Luigi, 20154 Milan (IT)
(74) Representative: Giannesi, Pier Giovanni

(56) References cited:
- EP-A- 0 069 464
- EP-A- 0 227 322
- EP-A- 0 356 369
- EP-A- 0 608 705
- DE-A- 1 480 889
- FR-A- 1 461 388
- FR-A- 2 520 303
- US-A- 4 484 610
- US-A- 4 854 358
- US-A- 5 154 216
- PATENT ABSTRACTS OF JAPAN vol. 095, no. 011, 26 December 1995 & JP 07 195909 A (SUMITOMO RUBBER IND LTD), 1 August 1995,

## Description

The present invention relates to a tyre, in particular for lorries and the like, provided with a tread band moulded with a raised pattern of the type comprising: a plurality of circumferential grooves disposed symmetrically to an equatorial plane of the tyre and defining respective circumferential land portions; and a plurality of narrow cuts extending transversely in the circumferential land portions.

In particular the invention concerns tyres suitable for use on the steering axle of lorries or articulated lorries intended for transportation of heavy loads over long motorway type distances at relatively high speed.

It is known that tyres mounted on lorries or similar transportation motor-vehicles have a tread band of different typology depending on whether the tyre is to be used on a traction axle, that is the driving wheels, or a driven axle, such as the steering front axle, for example.

Tyres to be mounted on steering axles, to which the present invention particularly refers, normally have a tread band characterized by a series of circumferential grooves of a more or less straight extension, giving the tread pattern a so-called "ribbed" aspect.

The geometry and arrangement of the circumferential grooves and the possible transverse cuts alternated therewith must be studied in such a manner that it meets different requirements, often in conflict with each other, which are hereinafter summarized.

First of all, the tread band must have a good evenness in wear, together with a high output per kilometre.

In addition, the tread band must be able to give the tyre a good steering property and a satisfactory drive precision on a dry road surface as well as good roadholding properties on a wet road surface. The importance of these operational properties is particularly felt with reference to tyres intended for mounting on the steering axle.

Furthermore, the tread band must have a good resistance to tearing so as to avoid occurrence, during the tyre lifetime, of undesired breakages and consequent detachment of more or less important fragments of the tread band itself.

It is further pointed out that the tread band must be able to efficiently eject stones or small fragments that are entrapped in the cuts and/or grooves arranged in the tread band itself. Actually, the persistence of these stones and fragments in the tread band, when the tyre is being used, could lead to perforation of the tread band and/or other damages to the underlying belt structures.

Another requirement of the tread band resides in its capability of giving the tyre a low rolling resistance, to the advantage of fuel consumptions.

EP 356 369 A, US 4,484,610 A and FR 1.461.388 A illustrate a tread pattern with a plurality of circumferentially continuous ribs, each rib provided with zig-zag shaped narrow cuts disposed both in circumferential alignment (EP 356 369 A) or transversally to the tire (US 4,484,610 A and FR 1.461.388 A) according to the rotation axis direction.

EP 608 705 A shows a tread pattern for cars, provided a central rib and two lateral rows of substantially rhombic blocks, including a plurality of narrow cuts, all concurring towards the equatorial plane in the same direction, according to the same inclination of the transversal grooves circumferentially separating from each other the blocks of said rows.

The tread pattern of US 4,854,358 A comprises a plurality of circumferential grooves, some shaped in zig-zag fashion, others extending straight on the upper edges and in an undulated trend on the bottom of the groove itself. Some of these circumferential grooves have stepped side walls with a cross-section outline which substantially extends along a broken line so delimiting, in the respective circumferential groove, one radially inner portion and one radially outer portion of different width.

Japan Publication JP 07195909 A refers to a tyre and a tread band according to the preambles of claims 1 and 22. The tyre comprises a tread pattern comprising lines of parallelogram shaped blocks, each block being provided with pair of sipings situated around the centre of gravity of the outer surface of the block, in order to reduce the rotating movement generated to blocks on the contact area.

In accordance with the present invention, it has been found that for achieving optimal results in relation to each of the above-listed operating requirements, without being obliged to penalize some requirements in favour of one or more of the other requirements, it is advantageous to arrange a plurality of narrow cuts in each of the land portions confined between two contiguous circumferential grooves, each of which extends transversely over the tread band, terminating at a certain distance from the adjacent grooves with the respective opposite ends.

Still for the above purposes, it also has been found advantageous, independently from the presence or not of the transverse narrow cuts, to confine one or more of the circumferential grooves by side walls of a broken-line outline, so that in the groove itself, a radially inner portion and a radially outer portion of a larger width than the radially inner portion are defined, said radially outer portion being connected to the radially inner portion by projecting hyphens of said side walls.

In one aspect, the present invention relates to a tyre for vehicle wheels, in particular for lorries and the like, comprising the features claimed in claim 1.

In a second aspect, the present invention relates to a tread band for tyres in lorries and the like, in particular a pre-moulded tread band for re-capping worn tyres, comprising the features according to claim 22.

Preferably, in the tread pattern of the invention, at least one of said circumferential grooves is confined by stepped side walls the cross-section outline of which substantially extends along a broken line to define, in the respective circumferential groove, at least one radially inner portion and one radially outer portion of greater width than the radially inner portion; and still more preferably, at least one of said circumferential grooves, in particular the central ones, further have upper edges of straight extension and a bottom surface extending in an undulated trend along the longitudinal extension of the groove itself.

Preferably the narrow cuts have a progressively increasing inclination relative to the circumferential-extension direction parallel to the equatorial plane, going from a value of at least 20° to a value as high as 90° at most, moving away from the equatorial plane itself.

It may be also provided that each narrow cut should result in an arrangement relative to the narrow cuts of the adjacent circumferential land portions such that a substantially wavelike line is defined, as a whole, on the transverse extension of the tread band.

In a preferential embodiment, the tread band comprises two central grooves and two shoulder grooves defining a central land portion disposed symmetrically to the equatorial plan, two shoulder land portions disposed at the opposite side edges of the tread band and two intermediate land portions each interposed between the central land portion and the respective shoulder land portion.

Advantageously,. at least some of said narrow cuts, and preferably those in the intermediate land portions, each have a raised central portion on their longitudinal extension, which is interposed between two side portions of greater depth.

At said raised central portion the narrow cut, approximately, has a depth included between 1/3 and 2/3, being preferably about 1/2, of the depth detectable on the side portions of the narrow cut itself.

According to another preferred embodiment, one or more of said circumferential grooves, preferably at least the shoulder grooves, is confined by stepped side walls the cross-section outline of which substantially extends following a broken line in order to define, in the respective circumferential groove, at least one radially inner portion and one radially outer portion of greater width than the radially inner portion.

In more detail, the cross-section outline of each of said side walls defines a projecting step inside the groove at the transition area between the radially inner portion and the radially outer portion.

Preferably, each of said steps, in a new tyre, is spaced apart from the outer rolling surface of the tread band by an amount included between 1 and 5 mm and projects inwardly of the respective circumferential groove by an amount included between 1 and 4 mm.

According to a preferential feature of the present invention, one or more of the circumferential grooves is confined by side walls having circumferentially-distributed auxiliary cuts extending in the adjacent circumferential land portions, preferably in a direction perpendicular to the equatorial plane, by an amount included between 1 and 5 mm.

In more detail, each of said stepped side walls has first auxiliary cuts opening onto the outer rolling surface of the tread band, and second auxiliary cuts the axially-directed extension of which substantially corresponds to the width of said step.

The first and second auxiliary cuts are mutually intercalated following a predetermined alternated sequence.

Still in accordance with the present invention, one or more of said circumferential grooves, and more preferably at least the central grooves, have a bottom surface provided with a central projection extending longitudinally in the circumferential groove itself.

Furthermore, at least the central grooves have upper edges of straight extension and a bottom surface extending in an undulated trend along the longitudinal extension of the groove itself.

Preferably, the tread band in accordance with the invention further comprises auxiliary circumferential hollows formed close to the opposite side edges of at least one of said circumferential grooves and preferably having a width and depth included between 1 and 5 mm.

Further features and advantages will become more apparent from the detailed description of a preferred but non-exclusive embodiment of a tread band for tyres, in particular for lorries and the like, according to the present invention. Such a description will be given hereinafter by way of non-limiting example, with reference to the accompanying drawings, in which:
- Fig. 1 is a plan view showing a portion of the tread band of a tyre in accordance with the invention;
- Fig. 2 is a sectional view of the tread band taken along line II-II in Fig. 1;
- Fig. 3 shows a fragmentary sectional view to an enlarged scale relative to the preceding figures, taken along line III-III in Fig. 1;
- Fig. 4 shows a fragmentary sectional view on an enlarged scale taken along line IV-IV in Fig. 1;
- Fig. 5 is an enlarged and fragmentary sectional view taken along line V-V in Fig. 1;
- Fig. 6 is a sectional view taken along line VI-VI in Fig. 1, still to an enlarged scale;
- Fig. 7 is an enlarged fragmentary sectional view taken along line VII-VII in Fig. 1;
- Fig. 8 is an enlarged and fragmentary sectional view taken along line VIII-VIII in Fig. 1;
- Fig. 9 shows the section of a tyre provided with a tread band in accordance with the present invention.

To the ends of the present description, by groove having an undulated course it is intended any groove that does not extend straight, a groove having a sinusoidal or zigzag extension, for example.

The particular example embodying the invention, as hereinafter described, refers to a tyre having size 315/80 R 22.5 to which all punctual values of the cited critical quantities refer, whereas the variability ranges of said quantities generally refer to the wide variety of tyre sizes for medium/heavy duty.

It is pointed out that all values cited in the progress of the present description are intended measured on a new tyre, mounted on the prescribed rim, inflated to the rated operating pressure but not loaded.

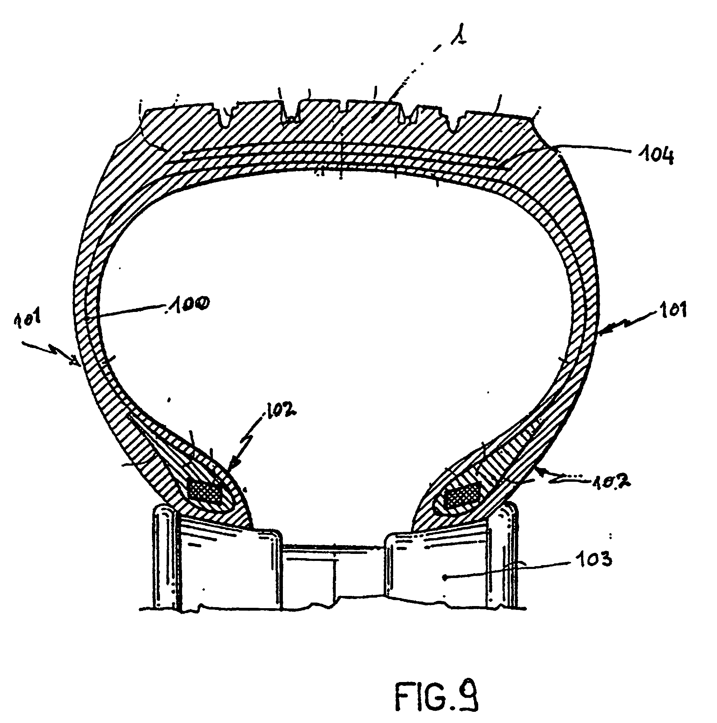

It is also to note that tyres to which the invention is referred are usual tyres of the traditional type, commonly known to those skilled in the art, depicted in right section in the accompanying Fig. 9: they comprise a carcass 100, of toroidal conformation, having a pair of axially-opposite sidewalls 101, terminating with beads 102 intended for the anchoring of the tyre to a corresponding mounting rim 103, and a tread band 1 intended for the rolling contact of the tyre on the ground, disposed crownwise to said carcass, provided with a raised pattern defined by cuts and grooves formed in the thickness of said band, in this case in accordance with the present invention.

If the carcass is of the radial type, the tyres also comprise a belt structure 104 disposed crown-wise to the carcass, interposed between the carcass and tread band, substantially extending from one tyre sidewall to the other tyre sidewall, that is as wide as the tread band.

With reference to the drawings, a tread band for tyres, in particular for lorries and the like, in accordance with the present invention has been generally identified by reference numeral 1.

The tread band 1 has a plurality of longitudinal grooves 2a, 2b, disposed symmetrically to the equatorial plane X-X of the tyre to which the tread band itself is applied in a raw state, before vulcanization, or already pre-moulded as in the case of covering a worn tyre by the well-known "cold" process.

The presence of the circumferential grooves 2a, 2b defines a plurality of circumferential land portions 3a, 3b, 3c on the tread band 1. In more detail, in a preferential solution the presence of two circumferential central grooves 2a and two circumferential shoulder grooves 2b is provided.

On the tread band 1 are accordingly defined a circumferential central land portion 3a, confined between the two central grooves 2a, a pair of circumferential shoulder land portions 3c extending at the side edges 1a of the tread band 1 and a pair of circumferential intermediate land portions 3b each confined between one of the central grooves 2a and one of the shoulder grooves 2b.

Preferably, each of the central grooves 2a and shoulder grooves 2b has a maximum width "L" included between 9 and 18 mm, preferably equal to 13 mm as regards the central grooves 2a and 14 mm as regards the shoulder grooves 2b, and a depth "H" included between 10 and 18 mm, preferably equal to 13.5 mm for both central 2a and shoulder 2b grooves.

In addition, the tread band 1 is provided with a plurality of transverse cuts of reduced width, usually referred to as "narrow cuts" 4, 5, 6, extending transversely in the circumferential land portions 3a, 3b, 3c.

In accordance with a preferential feature of the present invention, the longitudinal extension of each of the narrow cuts 4, 5, 6 runs over the respective circumferential land portion 3a, 3b, 3c for an amount of lower width than the overall width of the land portion itself.

In other words, each narrow cut 4, 5, 6 preferably of a width, approximately, included between 0.4 and 1.2 mm, more preferably equal to 0.8 mm terminates with its respective ends 4a, 5a, 6a conveniently spaced apart from the side edges of the respective land portion 3a, 3b, 3c, without opening into the adjacent circumferential grooves 2a, 2b.

This expedient is advantageous for the tyre to reach a good steering property and therefore guide precision, and also for resistance to tearing and, more generally, for an even wear of the tread band.

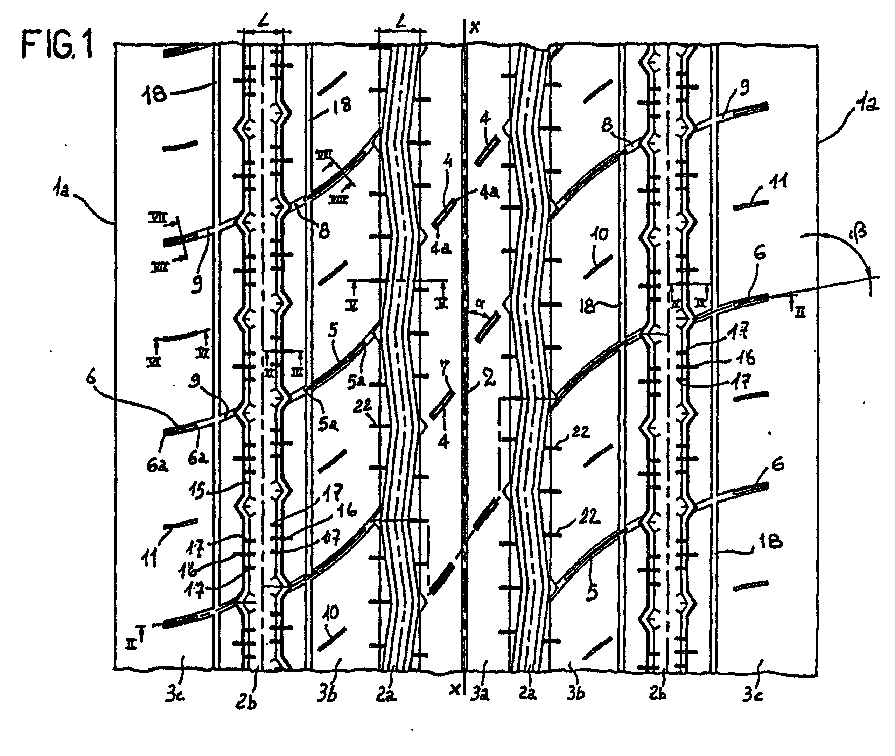

For further emphasizing these advantageous aspects the narrow cuts 4, 5, 6 are preferably provided to have a progressively increasing inclination, relative to the circumferential extension direction parallel to the equatorial plane X-X, moving away from the equatorial plane itself. This situation is clearly shown in Fig. 1 where the inclination of the narrow cuts at the equatorial plane X-X, preferably included between 20° and 60°, has been identified by "α", whereas the inclination of the same narrow cuts close to the opposite side edges 1a of the tread band 1, preferably included between 60° and 90°, has been denoted by "β".

Still in Fig. 1, it can be easily noticed that, in accordance with a further preferential feature of the invention, the narrow cuts 4, 5, 6 belonging to the respective circumferential land portions 3a, 3b, 3c are respectively disposed following a substantially undulated trend, preferably symmetrically to the equatorial plane X-X. In other words, the narrow cuts 4, 5, 6 are mutually disposed in such a manner that, as a whole, they define a substantially wavelike line on the transverse extension of the tread band. On the other hand, these narrow cuts, in an alternative embodiment, may be arranged, still substantially in an undulated form, in mirror image relationship with respect to the equatorial plane.

As clearly shown in Fig. 1, transverse depressions 7, 8, 9 of a width and depth included, approximately, between 1 and 5 mm, preferably of 2 mm, may be advantageously superposed on said narrow cuts.

As shown in Fig. 1, the transverse depressions may extend beyond the ends 5a, 6a of the respective narrow cuts until they open into the adjacent circumferential grooves 2a, 2b.

This situation is exemplified in Fig. 1, with reference to transverse depressions 8 and 9 respectively disposed on the circumferential intermediate 3b and shoulder 3c land portions.

In a preferential embodiment, the circumferential central land portion 3a is provided with two series of central narrow cuts 4, located on opposite sides relative to the equatorial plane X-X, each of which has a longitudinal extension preferably included between 5 and 25 mm, more preferably of 10 mm, and a depth included between 3 and 12 mm, more preferably of 5 mm.

The geometrical and size features of each of the narrow cuts 6 located on the circumferential shoulder land portions 3c can be substantially identical with those of the central narrow cuts 4.

In a different embodiment the central narrow cuts 4 can extend beyond the ends 4a until they open into the adjacent circumferential grooves 2a and/or into a circumferential hollow 2, preferably disposed at the equatorial plane and preferably having a width and depth included between 1 and 5 mm and/or substantially equal to that of the transverse depressions 7, 8, 9.

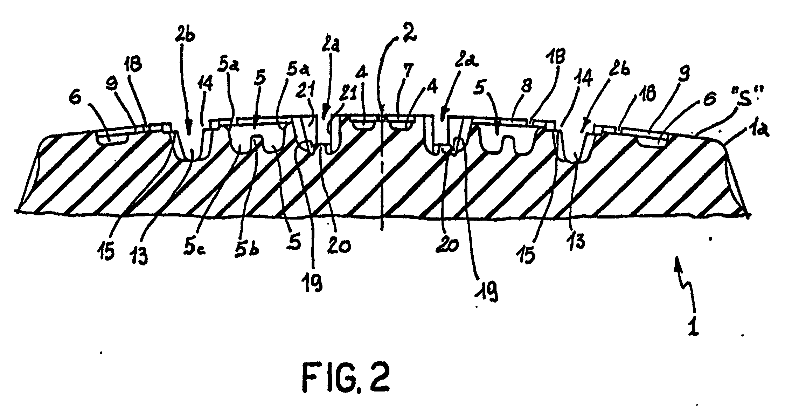

The circumferential intermediate land portions 3b, in turn, have intermediate narrow cuts 5, each of which terminates with its ends 5a at a distance included between 1 and 6 mm, preferably of 3.5 mm, from the adjacent edge of the circumferential groove 2a, 2b. Each intermediate narrow cut 5 further has a maximum depth included between 6 and 16 mm, preferably of 12 mm, and is advantageously provided with a raised central portion 5b (Fig. 2). Close to this central portion 5b, the depth of the intermediate narrow cut 5 is included between 1/3 and 2/3, preferably corresponding to about 1/2 of the depth detectable at the adjacent side portions 5c of the narrow cut itself.

Advantageously, the presence of the raised portions 5b in the central narrow cuts 5 prevents the opposite longitudinal edges of the corresponding transverse depression 8 and/or of the narrow cut itself from opening out too much, thereby incorporating small stones or giving rise to initiation of uneven wear.

Advantageously, the intermediate narrow cuts 5, as well as the shoulder narrow cuts 6, can be alternated with auxiliary intermediate narrow cuts 10 and shoulder narrow cuts 11 respectively, the geometrical and dimensional features of which may substantially correspond to those described with reference to the central 4 and shoulder 6 narrow cuts.

As clearly viewed from Figs. 2, 3 and 4, it is provided that one or more of the circumferential grooves 2a, 2b and more specifically at least the shoulder grooves 2b, should be delimited by stepped side walls 12 the cross-section outline of which substantially extends following a broken line.

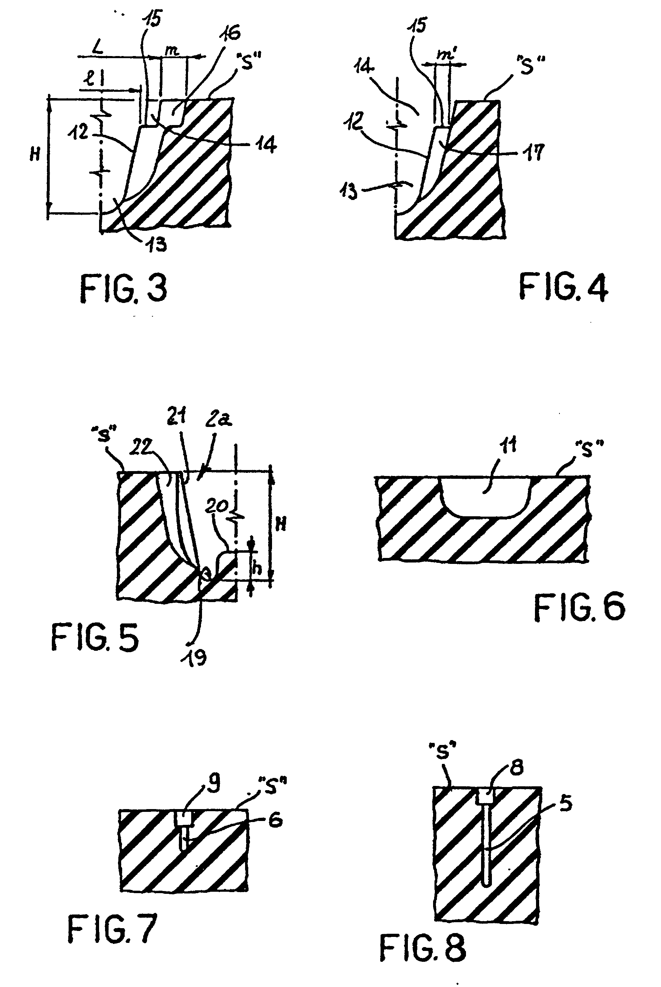

In this way, the stepped side walls 12 define in the corresponding circumferential groove 2b at least one radially inner portion, denoted by 13 in Figs. 3 and 4, and one radially outer portion 14 the width "L" of which corresponding to the maximum width of the groove itself, is greater than the width "1" of the radially inner portion 13. At the transition area between the radially inner portion 13 and the radially outer portion 14, the cross-sectional outline of each of the side walls 12 defines a step 15 projecting inwardly of the groove itself. This step 15 is preferably oriented parallelly to the outer rolling surface of the tread band.

The presence of the steps 15, preferably spaced apart from the outer rolling surface "S" by a distance included between 1 and 5 mm, more preferably of 3 mm, enables possible phenomena of uneven wear that may initiate along the opposite side edges of the shoulder grooves 2b to be halted.

Actually, due to the geometrical configuration of the stepped walls 12, when the tread band is worn out as much as about 3 mm in thickness, a possible initiation of uneven wear along the edges of the shoulder grooves 2b is opposed by the emerging of steps 15 projecting inwardly of the groove preferably by a value m' substantially equal to 2 mm and in any case included between 1 and 4 mm.

In accordance with a further preferential feature of the present invention, each of the stepped side walls 12 has circumferentially-distributed auxiliary cuts 16, 17 extending in the adjacent circumferential intermediate 3b and shoulder 3c land portions with a transverse length, measured perpendicularly to the equatorial plane X-X, included between 1 and 5 mm, preferably of about 3 mm.

In particular, provision is made for first auxiliary cuts 16 opening onto the outer rolling surface "S" of the tread band. These first auxiliary cuts 16 preferably have a transverse length "m" substantially corresponding to 3 mm, and extend following an outline parallel to the outline of the corresponding stepped side wall, as clearly shown in Fig. 3.

Each stepped side wall 12 also has second auxiliary cuts 17 penetrating the wall itself exclusively at the radially inner portion 13 of the groove 2b, by a transverse length "m"' substantially corresponding to the step 15 width.

The presence of the auxiliary cuts 17 reveals to be advantageous for the purpose of reducing initiation of uneven-wear phenomena along the edges of the corresponding grooves 1b.

Advantageously, the second auxiliary cuts are suitable for performing their function concurrently with emerging of steps 15 on the partly worn tread band surface, so as to offer a further hindrance to progressing of possible uneven-wear phenomena.

As viewed from Fig. 1, the first and second auxiliary cuts 16, 17 are preferably intercalated following an alternated sequence. In particular, according to a preferred embodiment, the edges of grooves 2b have a series of notches k along their longitudinal extension, the notches of one edge being circumferentially graded down with those of the faced edge; every two successive notches, the edge preferably has a pair of auxiliary cuts 17 and one auxiliary cut 16 interposed between said pair.

Third auxiliary cuts 22 are circumferentially distributed along the opposite edges of each of the central grooves 2a.

Still for the purpose of reducing possible uneven-wear phenomena as much as possible, along the opposite side edges of one or more of the circumferential grooves 2a, 2b, along the shoulder grooves 2b in the embodiment herein shown, provision may be advantageously made for auxiliary circumferential hollows 18 preferably having a width and depth included between 1 and 5 mm and/or substantially equal to that of the transverse cuts 7, 8, 9.

Preferably the auxiliary circumferential hollows are arranged spaced apart from the edge of the axially adjacent groove by a distance included between 4 and 10 mm, more preferably of about 7 mm.

Yet according to the present invention, one or more of the circumferential grooves 2a, 2b has a bottom surface 19 provided with a central projection 20 extending longitudinally in the circumferential groove itself. The central projection 20 preferably has a height "h" included between 2 and 7 mm, preferably of 3 mm, and it prevents small stones possibly captured in the groove 2a from damaging the bottom of the groove itself and/or penetrating into the tread band 1 thereby damaging the underlying belt structures.

Since the applicant has found that the possibility of stones to be entrapped is higher in the central areas of the tread, in the preferential embodiment shown the presence of central projections is provided in the central grooves 2a alone.

For the purpose of keeping a good adhesion, even on a wet road surface as well, it is advantageously provided that, as the tyre wear increases, the bottom surface 19 of one or more of the circumferential grooves 2a, 2b, both central grooves 2a in the example herein shown, should extend following an undulated trend along the longitudinal extension of the groove itself. Side walls 21, having undulated trend too in the longitudinal extension of the corresponding groove 2a, connect the bottom surface 19 with the upper groove edges of the groove itself preferably having a circumferential extension. Therefore, when a tyre is new, the central grooves 2a will have a quite straight extension on the ground-contacting area. As the tyre wear goes on, extension of the central grooves 2a at the ground-contacting area will take an increasingly more marked undulation, so as to compensate for the tread band 1 wear with increasing roadholding, above all in connection with tangential forces generated on braking.

From repeated tests carried out by the applicant it has been found that the tyres of the invention efficiently solve the problem of achieving a low rolling resistance, good evenness in wear and high output per kilometre, while at the same time keeping the other performances to the highest level, particularly in terms of steering behaviour and roadholding both on a dry and a wet road.

## Claims

1. A tyre for vehicle wheels, in particular for lorries and the like, comprising a carcass of toroidal conformation, having a pair of axially opposite sidewalls terminating with beads intended for anchoring of the tyre to a corresponding mounting rim and a tread band for rolling contact of the tyre on the ground, disposed crown-wise to said carcass and provided with a raised pattern formed in the tread thickness, comprising :
- a plurality of circumferential grooves (2a, 2b), disposed symmetrically to an equatorial plane (X-X) of the tyre, and defining respective circumferential land portions (3a, 3b, 3c); and
- a plurality of narrow cuts (4, 5, 6) transversely extending in the circumferential land portions (3a, 3b, 3c), each of said narrow cuts (4, 5, 6) having its respective ends (4a, 5a, 6a) spaced apart from the side edges of the respective circumferential land portion (3a, 3b, 3c) and having a progressively increasing inclination relative to the circumferential-extension direction parallel to the equatorial plane (X-X), on moving away from the equatorial plane itself **characterized in that**: at least one of said circumferential grooves (2a, 2b) has a bottom surface (19) provided with a central projection (20) extending longitudinally in the circumferential groove itself.

2. A tyre according to claim 1, **characterized in that** at least one of said circumferential grooves (2b) is confined by stepped side walls (12) the cross-section outline of which substantially extends along a broken line to define, in the respective circumferential groove (2b), at least one radially inner portion (13) and one radially outer portion (14) of greater width (L) than the width (1) of the radially inner portion (13).

3. A tyre according to claim 1, **characterized in that** the inclination of said narrow cuts (4, 5, 6) is included between 20 and 60° at the equatorial plane (X-X).

4. A tyre according to claim 1, **characterized in that** the inclination of said narrow cuts (4, 5, 6) is included between 60° and 90° at the side edges of the tread band.

5. A tyre according to claim 1, **characterized in that** each narrow cut (4, 5, 6) is substantially such arranged relative to the narrow cuts of the adjacent circumferential land portions (3a, 3b, 3c) that a substantially wavelike line is defined, as a whole, on the transverse extension of the tread band (1).

6. A tyre according to claim 2, **characterized in that** the cross-section outline of each of said side walls (12) defines a step (15) projecting inwardly of the groove at the transition area between the radially inner portion (13) and radially outer portion (14) thereof.

7. A tyre according to claim 6, **characterized in that** each of said steps (15) is spaced apart from the outer rolling surface (S) of the tread band (1), by an amount included between 1 and 5 mm.

8. A tyre according to claim 6, **characterized in that** each of said steps projects inwardly of the respective circumferential groove (2b) by an amount (m') included between 1 and 4 mm.

9. A tyre according to claim 1, **characterized in that** at least one of said circumferential grooves (2a, 2b) is confined by side walls (12, 21) having circumferentially-distributed auxiliary cuts (16, 17, 22), extending in the adjacent circumferential land portions (3a, 3b, 3c) the transverse length of which, measured perpendicularly to the equatorial plane (X-X), is included between 1 and 5 mm.

10. A tyre according to claim 6, **characterized in that** each of said stepped side walls has first auxiliary cuts (16) opening onto the outer rolling surface (S) of the tread band (1), and second auxiliary cuts (17) the transverse length of which substantially corresponds to the width of said step (15).

11. A tyre according to claim 10, **characterized in that** the first and second auxiliary cuts (16, 17) are intercalated following an alternated sequence.

12. A tyre according to claim 1, **characterized in that** at least one of said narrow cuts (5) has a raised central portion (5b) on its longitudinal extension, which is interposed between two side portions (5c) of greater depth.

13. A tyre according to claim 12, **characterized in that** at said raised central portion (5b) the narrow cut (5) has a depth included between 1/3 and 2/3 of the depth measured on the side portions (5c) of the narrow cut itself.

14. A tyre according to claim 1, **characterized in that** at least one of said circumferential grooves (2a, 2b) has upper edges of straight extension and a bottom surface (19) extending in an undulated trend along the longitudinal extension of the groove itself.

15. A tyre according to claim 1, **characterized by** further comprising auxiliary circumferential hollows (18) formed close to the opposite side edges of at least one of said circumferential grooves (2a, 2b).

16. A tyre according to claim 15, **characterized in that** said circumferential hollows (18) have a width included between 1 and 5 mm and a depth included between 1 and 5 mm.

17. A tyre according to claim 1, **characterized by** comprising two central grooves (2a) and two shoulder grooves (2b) defining a central land portion (3a) disposed symmetrically to the equatorial plane (X-X), two shoulder land portions (3c) disposed at the opposite side edges (1a) of the tread band (1) and two intermediate land portions (3b) each interposed between the central land portion (3a) and the respective shoulder land portion (3c).

18. A tyre according to claim 17, **characterized in that** said stepped walls (12) are arranged at least on the shoulder grooves (2b).

19. A tyre according to claim 1, **characterized in that** said central projection (20) is arranged at least in the circumferential central grooves (2a).

20. A tyre according to claim 14, **characterized in that** said bottom surface (19) of undulated trend is arranged at least on the circumferential central grooves (2a).

21. A tyre according to claim 15, **characterized in that** said circumferential hollows (18) are associated with at least the opposite side edges of the circumferential shoulder grooves (2b).

22. A tread band, in particular for re-capping worn tyres, especially tyres for lorries and the like, pre-moulded with a raised pattern, comprising;
- a plurality of circumferential grooves (2a, 2b) disposed symmetrically to an equatorial plane (X-X) of the tyre and defining respective circumferential land portions (3a, 3b, 3c); and
- a plurality of narrow cuts (4, 5, 6) transversely extending in the circumferential land portions (3a, 3b, 3c), each of said narrow cuts (4, 5, 6) having its respective ends (4a, 5a, 6a) spaced apart from the side edges of the respective circumferential land portion (3a, 3b, 3c), said narrow cuts (4, 5, 6) having a progressively increasing inclination relative to the circumferential-extension direction parallel to the equatorial plane (X-X), on moving away from the equatorial plane itself **characterized in that** at least one of said circumferential grooves (2a, 2b) has a bottom surface (19) provided with a central projection (20) extending longitudinally in the circumferential groove itself.

23. A tread band, according to claim 22, **characterized in that** - at least one of said circumferential grooves (2b) is confined by stepped side walls (12) the cross-section outline of which substantially extends following a broken line in order to define, in the respective circumferential groove (2b), - at least one radially inner portion (13) and one radially outer portion (14) having greater width (L) than the width (1) of the radially inner portion (13).

24. A tread band according to claim 22, **characterized in that** at least one of said circumferential grooves (2a) has upper edges of straight extension and a bottom surface (19) extending in an undulated trend along the longitudinal extension of the groove itself.

## Patentansprüche

1. Reifen für Fahrzeugräder, insbesondere für Lastkraftwagen und dergleichen, mit einer Karkasse, die eine toroidförmige Gestalt und ein Paar von axial gegenüberliegenden Seitenwänden aufweist, die in Wulsten für die Verankerung des Reifens an einer entsprechenden Montagefläche enden, und mit einem Laufflächenband für einen Abrollkontakt des Reifens auf dem Boden, das kronenförmig an der Karkasse angeordnet ist, mit einem in der Laufflächendicke ausgebildeten erhabenen Muster versehen ist und
- eine Vielzahl von Umfangsnuten (2a, 2b), die symmetrisch zu einer Äquatorialebene (X-X) des Reifens angeordnet sind und jeweilige Umfangsstegabschnitte (3a, 3b, 3c) begrenzen, und
- eine Vielzahl von schmalen Einschnitten (4, 5, 6) aufweist, die sich quer in den Umfangsstegabschnitten (3a, 3b, 3c) erstrecken, wobei jeder der schmalen Einschnitte (4, 5, 6) mit seinen jeweiligen Enden (4a, 5a, 6a) im Abstand von den Seitenrändern des jeweiligen Umfangsstegabschnitts (3a, 3b, 3c) angeordnet ist und eine fortschreitend zunehmende Neigung bezüglich der Umfangserstreckungsrichtung parallel zu Äquatorialebene (X-X) bei einem Wegbewegen von der Äquatorialebene hat,
**dadurch gekennzeichnet, dass** wenigstens eine der Umfangsnuten (2a, 2b) eine Bodenfläche (19) aufweist, die mit einem zentralen Vorsprung (20) versehen ist, der sich in Längsrichtung in der Umfangsnut erstreckt.

2. Reifen nach Anspruch 1, **dadurch gekennzeichnet, dass** wenigstens eine der Umfangsnuten (2b) von abgestuften Seltenwänden (12) begrenzt ist, deren Querschnittsumriss sich im Wesentlichen längs einer unterbrochenen Linie erstreckt, wodurch in der entsprechenden Umfangsnut (2b) wenigstens ein radial innerer Abschnitt (13) und ein radial äußerer Abschnitt (14) gebildet wird, dessen Breite (L) größer ist als die Breite (I) des radial Inneren Abschnitts (13).

3. Reifen nach Anspruch 1, **dadurch gekennzeichnet, dass** die Nelgung der schmalen Einschnitte (4, 5, 6) zwischen 20 und 60° an der Äquatorialebene (X-X) beträgt.

4. Reifen nach Anspruch 1, **dadurch gekennzeichnet, dass** die Neigung der schmalen Einschnitte (4, 5, 6) zwischen 60° und 90° an den Seitenrändern des Laufflächenbandes beträgt.

5. Reifen nach Anspruch 1, **dadurch gekennzeichnet, dass** jeder schmale Einschnitt (4, 5, 6) im Wesentlichen so bezüglich der schmalen Einschnitte der benachbarten Umfangsstegabschnitte (3a, 3b, 3c) angeordnet ist, dass auf der Quererstreckung des Laufflächenbandes (1) insgesamt eine im Wesentlichen wellenförmlge Linie gebildet wird.

6. Reifen nach Anspruch 2, **dadurch gekennzeichnet, dass** der Querschnittsumriss einer jeder der Seitenwände (12) eine Stufe (15) bildet, die an dem Übergangsbereich zwischen dem radial inneren Abschnitt (13) und dem radial äußeren Abschnitt (14) nach innen in die Nut vorsteht.

7. Reifen nach Anspruch 6, **dadurch gekennzeichnet, dass** jede der Stufen (15) in einem Abstand von der äußeren Abrollfläche (S) des Laufflächenbandes (1) angeordnet ist, der eine Größe zwischen 1 und 5 mm hat.

8. Reifen nach Anspruch 6, **dadurch gekennzeichnet, dass** jede der Stufen von der jeweiligen Umfangsnut (2b) mit einer Größe (m') zwischen 1 und 4 mm nach innen vorsteht.

9. Reifen nach Anspruch 1, **dadurch gekennzeichnet, dass** wenigstens eine der Umfangsnuten (2a, 2b) von Seitenwänden (12, 21) begrenzt ist, die am Umfang verteilte Zusatzeinschnitte (16, 17, 22) aufweist, die sich in den benachbarten Umfangsstegabschnitten (3a, 3b, 3c) erstrecken und deren Querlänge gemessen senkrecht zu der Äquatorialebene (X-X) zwischen 1 und 5 mm beträgt.

10. Reifen nach Anspruch 6, **dadurch gekennzeichnet, dass** jede der abgestuften Seitenwände erste Zusatzeinschnitte (16), die auf der äußeren Abrollfläche (S) des Laufflächenbandes (1) münden, und zweite Zusatzeinschnitte (17) hat, deren Querlänge Im Wesentlichen der Breite der Stufe (15) entspricht.

11. Reifen nach Anspruch 10, **dadurch gekennzeichnet, dass** die ersten und zweiten Zusatzeinschnitte (16, 17) einer abwechselnden Sequenz folgend eingefügt sind.

12. Reifen nach Anspruch 1, **dadurch gekennzeichnet, dass** wenigstens einer der schmalen Einschnitte (5) einen erhabenen zentralen Abschnitt (5b) auf seiner Längserstreckung hat, der zwischen zwei Seitenabschnitten (5c) mit größerer Tiefe angeordnet ist.

13. Reifen nach Anspruch 12, **dadurch gekennzeichnet, dass** der schmale Einschnitt (5) an dem erhabenen zentralen Abschnitt (5b) eine Tiefe hat, die zwischen 1/3 und 2/3 der Tiefe liegt, die an den Seitenabschnitten (5c) des schmalen Einschnitts gemessen wird.

14. Reifen nach Anspuch 1, **dadurch gekennzeichnet, dass** wenigstens eine der Umfangsnuten (2a, 2b) obere Ränder mit gerader Erstreckung und eine Bodenfläche (19) hat, die auf der Längserstreckung der Nut mit einer wellenförmigen Tendenz verläuft.

15. Reifen nach Anspruch 1, **dadurch gekennzeichnet, dass** er weiterhin zusätzliche Umfangsrinnen (18) aufweist, die nahe an den gegenüberliegenden Seitenrändern wenigstens einer der Umfangsnuten (2a, 2b) ausgebildet sind.

16. Reifen nach Anspruch 15, **dadurch gekennzeichnet, dass** die Umfangsrinnen (18) eine Breite zwischen 1 und 5 mm und eine Tiefe zwischen 1 und 5 mm haben.

17. Reifen nach Anspruch 1, **dadurch gekennzeichnet, dass** er zwei zentrale Nuten (2a) und zwei Schulternuten (2b) hat, die einen zentralen Stegabschnitt (3a), der symmetrisch zu der Äquatorialebene (X-X) angeordnet ist, zwei Schulterstegabschnitte (3c), die an den gegenüberliegenden Seitenrändern (1a) des Laufflächenbandes (1) angeordnet sind, und zwei Zwischenstegabschnitte (3b) begrenzt, von denen jeder zwischen dem zentralen Stegabschnitt (3a) und dem jeweiligen Schulterstegabschnitt (3c) angeordnet ist.

18. Reifen nach Anspruch 17, **dadurch gekennzeichnet, dass** die abgestuften Wände (12) wenigstens an den Schulternuten (2b) angeordnet sind.

19. Reifen nach Anspruch 1, **dadurch gekennzeichnet, dass** der zentrale Abschnitt (20) wenigstens in den zentralen Umfangsnuten (2a) angeordnet ist.

20. Reifen nach Anspruch 14, **dadurch gekennzeichnet, dass** die Bodenfläche (19) mit wellenförmiger Tendenz wenigstens an den zentralen Umfangsnuten (2a) angeordnet ist.

21. Reifen nach Anspruch 16, **dadurch gekennzeichnet, dass** die Umfangsrinnen (18) mit wenigstens den gegenüberliegenden Seitenrändern der Umfangsschulternuten (2b) verbunden sind.

22. Laufflächenband, insbesondere für eine Neuprofilierung verschlissener Reifen, vor allem von Reifen für Lastkraftwagen und dergleichen, wobei das Laufflächenband mit einem erhabenen Muster vorher ausgeformt ist und
- eine Vielzahl von Umfangsnuten (2a, 2b), die symmetrisch zu einer Äquatorialebene (X-X) des Reifens angeordnet sind und jeweilige Umfangsstegabschnitte (3a, 3b, 3c) bilden, und
- eine Vielzahl von schmalen Einschnitten (4, 5, 6) aufweist, die sich in den Umfangsstegabschnitten (3a, 3b, 3c) quer erstrecken, wobei jeder der schmalen Einschnitte (4, 5, 6) mit seinen jeweiligen Enden (4a, 5a, 6a) im Abstand von den Seitenrändern des jeweiligen Umfangsstegabschnittes (3a, 3b, 3c) angeordnet ist und die schmalen Einschnitte (4, 5, 6) eine fortschreitend zunehmende Neigung bezüglich der Umfangserstreckungsrichtung parallel zur Äquatorialebene (X-X) bei einem Wegbewegen von der Äquatorialebene hat,
**dadurch gekennzeichnet, dass** wenigstens eine der Umfangsnuten (2a, 2b) eine Bodenfläche (19) aufweist, die mit einem zentralen Vorsprung (20) versehen ist, der sich in Längsrichtung der Umfangsnut erstreckt.

23. Laufflächenband nach Anspruch 22, **dadurch gekennzeichnet, dass** wenigstens eine der Umfangsnuten (2b) von abgestuften Seitenwänden (12) begrenzt wird, deren Querschnittsumriss sich im Wesentlichen einer unterbrochenen Linie folgend erstreckt, wodurch in der jeweiligen Umfangsnut (2b) wenigstens ein radial innerer Abschnitt (13) und ein radial äußerer Abschnitt (14) gebildet wird, dessen Breite (L) größer ist als die Breite (I) des radial inneren Abschnitts (13).

24. Laufflächenband nach Anspruch 22, **dadurch gekennzeichnet, dass** wenigstens eine der Umfangsnuten (2a) obere Ränder mit gerader Erstreckung und eine Bodenfläche (19) hat, die auf der Längserstreckung der Nut in einer wellenförmigen Tendenz verläuft.

## Revendications

1. Pneu pour roues de véhicule, en particulier pour camions et similaires, comprenant une carcasse de conformation toroïdale, comportant une paire de flancs axialement opposés se terminant par des talons destinés à l'accrochage du pneu sur une jante correspondante et une bande de roulement pour le contact de roulement du pneu sur le sol, disposée en position de sommet par rapport à ladite carcasse et pourvue d'un motif dressé formé dans l'épaisseur de la bande de roulement, comprenant :
- une pluralité de rainures circonférentielles (2a, 2b), placées de manière symétrique par rapport à un plan équatorial (X-X) du pneu, et définissant des parties terrestres circonférentielles respectives (3a, 3b, 3c) ; et
- une pluralité d'entailles étroites (4, 5, 6) s'étendant transversalement dans les parties terrestres circonférentielles (3a, 3b, 3c), chacune desdites entailles étroites (4, 5, 6) ayant ses extrémités respectives (4a, 5a, 6a) espacées par rapport aux bords latéraux de la partie terrestre circonférentielle respective (3a, 3b, 3c) et ayant une inclinaison augmentant progressivement par rapport à la direction d'extension circonférentielle parallèle au plan équatorial (X-X), en s'éloignant du plan équatorial lui-même **caractérisé en ce que** : au moins l'une desdites rainures circonférentielles (2a, 2b) a une surface de fond (19) munie d'une protubérance centrale (20) s'étendant longitudinalement dans la rainure circonférentielle elle-même.

2. Pneu selon la revendication 1, **caractérisé en ce que** au moins l'une desdites rainures circonférentielles (2b) est confinée par des parois latérales étagées (12) dont le profil de la section s'étend sensiblement le long d'une ligne brisée pour définir, dans la rainure circonférentielle respective (2b), au moins une partie radialement intérieure (13) et une partie radialement extérieure (14) de largeur (L) supérieure à la largeur (1) de la partie radialement intérieure (13).

3. Pneu selon la revendication 1, **caractérisé en ce que** l'inclinaison desdites entailles étroites (4, 5, 6) est comprise entre 20 et 60° au niveau du plan équatorial (X-X).

4. Pneu selon la revendication 1, **caractérisé en ce que** l'inclinaison desdites entailles étroites (4, 5, 6) est comprise entre 60° et 90° au niveau des bords latéraux de la bande de roulement.

5. Pneu selon la revendication 1, **caractérisé en ce que** chaque entaille étroite (4, 5, 6) est sensiblement agencée par rapport aux entailles étroites des parties terrestres circonférentielles adjacentes (3a, 3b, 3c) de telle manière que, dans l'ensemble, une ligne sensiblement en forme d'onde est définie sur l'étendue transversale de la bande de roulement (1).

6. Pneu selon la revendication 2, **caractérisé en ce que** le profil de la section de chacune desdites parois latérales (12) définit une marche (15) faisant saillie vers l'intérieur de la rainure au niveau de la zone de transition entre la partie radialement intérieure (13) et la partie radialement extérieure (14) de celle-ci.

7. Pneu selon la revendication 6, **caractérisé en ce que** chacune desdites marches (15) est espacée par rapport à la surface extérieure de roulement (S) de la bande de roulement (1), d'une quantité comprise entre 1 et 5 mm.

8. Pneu selon la revendication 6, **caractérisé en ce que** chacune desdites marches fait saillie vers l'intérieur de la rainure circonférentielle respective (2b) d'une quantité (m') comprise entre 1 et 4 mm,

9. Pneu selon la revendication 1, **caractérisé en ce que** au moins l'une desdites rainures circonférentielles (2a, 2b) est confinée par des parois latérales étagées (12, 21) ayant des entailles auxiliaires réparties circonférentiellement (16, 17, 22), s'étendant dans les parties terrestres circonférentielles adjacentes (3a, 3b, 3c) dont la longueur transversale, mesurée perpendiculairement au plan équatorial (X-X), est comprise entre 1 et 5 mm.

10. Pneu selon la revendication 6, **caractérisé en ce que** chacune desdites parois latérales étagées comporte des premières entailles auxiliaires (16) débouchant à la surface extérieure de roulement (S) de la bande de roulement (1), et des deuxièmes entailles auxiliaires (17) dont la longueur transversale correspond sensiblement à la largeur de ladite marche (15).

11. Pneu selon la revendication 10, **caractérisé en ce que** les premières et deuxièmes entailles auxiliaires (16, 17) sont intercalées en suivant une séquence alternée.

12. Pneu selon la revendication 1, **caractérisé en ce que** au moins l'une desdites entailles étroites (5) comporte une partie centrale dressée (5b) sur son étendue longitudinale, qui est intercalée entre deux parties latérales (5c) de plus grande profondeur.

13. Pneu selon la revendication 12, **caractérisé en ce que**, au niveau de ladite partie centrale dressée (5b), l'entaille étroite (5) a une profondeur comprise entre 1/3 et 2/3 de la profondeur mesurée sur les parties latérales (5c) de l'entaille étroite elle-même.

14. Pneu selon la revendication 1, **caractérisé en ce que** au moins l'une desdites rainures circonférentielles (2a, 2b) a des bords supérieurs d'étendue droite et une surface de fond (19) s'étendant en une orientation ondulée le long de l'étendue longitudinale de la rainure elle-même.

15. Pneu selon la revendication 1, **caractérisé en ce qu'**il comprend en outre des creux circonf6rentiels auxiliaires (18) formés près des bords latéraux opposés d'au moins l'une desdites rainures circonférentielles (2a, 2b).

16. Pneu selon la revendication 15, **caractérisé en ce que** lesdits creux circonférentiels (18) ont une largeur comprise entre 1 et 5 mm et une profondeur comprise entre 1 et 5 mm.

17. Pneu selon la revendication 1, **caractérisé en ce qu'**il comprend deux rainures centrales (2a) et deux rainures d'épaulement (2b) définissant une partie terrestre centrale (3a) placée de manière symétrique par rapport au plan équatorial (X-X), deux parties terrestres d'épaulement (3c) placées au niveau des bords latéraux opposés (1a) de la bande de roulement (1) et deux parties terrestres intermédiaires (3b) intercalées chacune entre la partie terrestre centrale (3a) et la partie terrestre d'épaulement (3c) respective.

18. Pneu selon la revendication 17, **caractérisé en ce que** lesdites parois latérales (12) sont disposées au moins sur les rainures d'épaulement (2b).

19. Pneu selon la revendication 1, **caractérisé en ce que** ladite protubérance centrale (20) est disposée au moins dans les rainures centrales circonférentielles (2a).

20. Pneu selon la revendication 14, **caractérisé en ce que** ladite surface de fond (19) d'orientation ondulée est disposée au moins sur les rainures centrales circonférentielles (2a).

21. Pneu selon la revendication 15, **caractérisé en ce que** lesdits creux circonférentiels (18) sont associés au moins aux bords latéraux opposés des rainures d'épaulement circonférentielles (2b).

22. Bance de roulement, en particulier pour le rechapage de pneus usés, notamment des pneus pour camions et similaires, prémoulés avec un motif dressé, comprenant :
- une pluralité de rainures circonférentielles (2a, 2b), placées de manière symétrique par rapport à un plan équatorial (X-X) du pneu, et définissant des parties terrestres circonférentielles respectives (3a, 3b, 3c) ; et
- une pluralité d'entailles étroites (4, 5, 6) s'étendant transversalement dans les parties terrestres circonférentielles (3a, 3b, 3c), chacune desdites entailles étroites (4, 5, 6) ayant ses extrémités respectives (4a, 5a, 6a) espacées par rapport aux bords latéraux de la partie terrestre circonférentielle respective (3a, 3b, 3c), lesdites entailles étroites (4, 5, 6) ayant une inclinaison augmentant progressivement par rapport à la direction d'extension circonférentielle parallèle au plan équatorial (X-X), en s'éloignant du plan équatorial lui-même **caractérisé en ce qu'**au moins l'une desdites rainures circonférentielles (2a, 2b) a une surface de fond (19) munie d'une protubérance centrale (20) s'étendant longitudinalement dans la rainure circonférentielle elle-même.

23. Bande de roulement selon la revendication 22, **caractérisée en ce que** au moins l'une desdites rainures circonférentielles (2b) est confinée par des parois latérales étagées (12) dont le profil de la section s'étend sensiblement en suivant une ligne brisée afin de définir, dans la rainure circonférentielle respective (2b), au moins une partie radialement intérieure (13) et une partie radialement extérieure (14) ayant une largeur (L) supérieure à la largeur (1) de la partie radialement intérieure (13).

24. Bande de roulement selon la revendication 22, **caractérisée en ce que** au moins l'une desdites rainures circonférentielles (2a) a des bords supérieurs d'étendue droite et une surface de fond (19) s'étendant en une orientation ondulée le long de l'étendue longitudinale de la rainure elle-même.
